# EUROPÄISCHE PATENTANMELDUNG

(11) **EP 2 716 690 A1**
(43) Veröffentlichungstag der Anmeldung: **09.04.2014**
(21) Anmeldenummer: 13183228.9
(22) Anmeldetag: 05.09.2013
(51) Int. Cl.: C08J 3/18, C08J 3/20, C08L 27/06

(54) **Verfahren zur Herstellung einer anorganischen oder organischen pastösen schmelzeförmigen Masse**

(30) Priorität: 05.10.2012 DE 102012109502
(71) Anmelder: Zeppelin Reimelt GmbH, 63322 Rödermark (DE)
(72) Erfinder: Kreis, Henning, 34292 Ahnatal/Heckershausen (DE); Brunkau, Markus, 34266 Niestetal (DE); Poller, Dr. Stephan, 44787 Bochum (DE); Schwarz, Dr. Raimund, 38644 Goslar (DE)
(74) Vertreter: Kleine, Hubertus

(57) **Zusammenfassung**

Ein Verfahren zur Herstellung einer anorganischen oder organischen pastösen schmelzeförmigen Masse weist die Verfahrensschritte
a) Zuführen einer Ausgangsmasse in einen Haupteinzug eines Extruders mit einer Extruderwelle oder mehreren in einer Förderrichtung nebeneinander angeordneten Extruderwellen,
b) Zuführen von Weichmachern enthaltenden Zuschlagstoffen,
c) Mischen und Fördern der Ausgangsmasse und der Zuschlagstoffe entlang der Extruderwelle(n) in Förderrichtung,
d) Temperieren der Ausgangsmasse und der Zuschlagstoffe im Extruder auf eine Temperatur unterhalb der Aufschmelztemperatur der Ausgangsmasse,
e) Temperieren der Ausgangsmasse und der Zuschlagstoffe im Extruder auf eine Temperatur oberhalb der Aufschmelztemperatur der Masse nach erfolgten Eindiffundieren der Zuschlagstoffe in die Ausgangsmasse,
f) Austragen der Masse aus dem Extruder,
auf, wobei die Verfahrensschritte a), b), c), d) und e) in dem Extruder während der Förderung entlang der einen Extruderwelle oder der in Förderrichtung betrachtet nebeneinander angeordneten Extruderwellen des Extruders erfolgen.

## Beschreibung

Die vorliegende Erfindung betrifft ein Verfahren zur Herstellung einer anorganischen oder organischen pastösen schmelzeförmigen Masse.

Zur Herstellung der oben beschriebenen Massen, die insbesondere in der Verarbeitung von Polyinylchlorid (PVC) als Dry Blend bezeichnet werden, welche aus einem Gemisch eines Kunststoffpulvers mit festen Zuschlagstoffen, Flüssigkeiten, wie beispielsweise Weichmachern oder anderen Additiven, bestehen, werden gemäß den aus dem Stand der Technik bekannten Verfahren hauptsächlich diskontinuierlich arbeitender Mischsysteme eingesetzt. Wichtig dabei ist es, die Masse in einem warmen Zustand bei Temperaturen zwischen 95 und 165°C zu halten, wobei insbesondere bei der PVC-Dryblend-Herstellung auf eine Temperatur unterhalb von 165°C zu achten ist. Die Herstellung erfolgt dabei üblicherweise im Batchbetrieb in dazu einsetzbaren Heiz-/Kühl-Mischsystemen. Während des Herstellungsverfahrens wird dabei der Weichmacher vom PVC vollständig absorbiert, so dass nach der Wiederabkühlung der Masse eine rieselfähige Mischung entsteht, die erst in einem anschließenden Verfahrensschritt üblicherweise einem Extrusionsprozess zugeführt wird.

Insbesondere durch die batchweise Zugabe der Komponenten dieses Dry Blends ist ein hoher Aufwand an Energie (Strom), Personal und Ausrüstung erforderlich.

Aus der DE 20 25 778 ist ein Verfahren zur Extrusionsformung von thermoplastischen, insbesondere pulverförmigen Kunststoffen sowie einem Extruder zur Durchführung dieses Verfahrens bekannt, bei dem der pulverförmige Kunststoff in einen Doppelschneckenextruder dosiert und erwärmt wird. In einem anschließenden Verfahrensschritt wird der Weichmacher in den Kunststoff eingedüst und gemischt. Die Temperatur dieses Gemisches wird dabei für eine vorbestimmte Zeit, die Trockenzeit, unterhalb der Schmelztemperatur des Kunststoffes gehalten. Während dieses Mischvorgangs wird der Weichmacher von dem Kunststoff, beispielsweise PVC, aufgenommen.

Um eine vollständige Aufnahme des Weichmachers in den Kunststoff gewährleisten zu können, ist bei diesem Verfahren jedoch eine sehr lange Verweilzeit der Mischung im Doppelschneckenextruder notwendig. Beschrieben ist, dass bei diesem Verfahren mit einem Doppelschneckenextruder mit einem Schneckendurchmesser von 100mm lediglich ein Durchsatz von 40 Kilogramm pro Stunde erreicht werden, was das Verfahren relativ unwirtschaftlich erscheinen lässt.

In der EP 0 988 338 B1 wird eine Möglichkeit beschrieben, die notwendige Aufnahmezeit des Weichmachers im Extrusionsprozess deutlich zu verkürzen bzw. die Aufnahmegeschwindigkeit zu erhöhen. Danach wird ein definierter Anteil an Weichmachern in einem separaten Mischprozess mittels einer Heizkühl-Mischerkombination zu einem Dry Blend verarbeitet, der anschließend einem Doppelschneckenextruder zudosiert wird. Die restliche Weichmacherzugabe erfolgt dann stromabwärts über eine oder mehrere Düsen direkt in den Extruder. Die Temperatur dieses PVC-Gemisches darf dabei die Grenztemperatur von bis zu 165°C nicht überschreiten, solange der Weichmacher noch nicht vollständig vom PVC aufgenommen wurde. Erst nach vollständiger Absorption des Weichmachers wird die Temperatur des Gemisches auf über 165°C angehoben, so dass dann eine Schmelze entsteht.

Aufgabe der vorliegenden Erfindung ist es ein Verfahren zur Herstellung einer anorganischen oder organischen pastösen schmelzeförmigen Masse bereit zu stellen, mit dem wirtschaftliche Durchsätze der Masse in zeit-, material- und energiesparender Weise erreichbar sind.

Diese Aufgabe wird durch ein Verfahren zur Herstellung einer anorganischen oder organischen pastösen schmelzeförmigen Masse mit den Merkmalen des Anspruchs 1 gelöst.

Das erfindungsgemäße Verfahren besteht in einem kontinuierlich ablaufenden Prozess und weist dabei die Verfahrensschritte
a) Zuführen einer Ausgangsmasse in einen Haupteinzug eines Extruders mit einer Extruderwelle oder mehreren in einer Förderrichtung nebeneinander angeordneten Extruderwellen,
b) Zuführen von Weichmachern enthaltenden Zuschlagstoffen,
c) Mischen und Fördern der Ausgangsmasse und der Zuschlagstoffe entlang der Extruderwelle(n) in Förderrichtung,
d) Temperieren der Ausgangsmasse und der Zuschlagstoffe im Extruder auf eine Temperatur unterhalb der Aufschmelztemperatur der Ausgangsmasse,
e) Temperieren der Ausgangsmasse und der Zuschlagstoffe im Extruder auf eine Temperatur oberhalb der Aufschmelztemperatur der Masse nach erfolgten Eindiffundieren der Zuschlagstoffe in die Ausgangsmasse,
f) Austragen der Masse aus dem Extruder
auf, wobei die Verfahrensschritte a), b), c), d) und e) in dem Extruder während der Förderung entlang der einen Extruderwelle oder der in Förderrichtung betrachtet nebeneinander angeordneten Extruderwellen des Extruders erfolgen.

Mit dem erfindungsgemäßen Verfahren ist eine batchweise Zugabe der Ausgangsmasse nicht mehr notwendig, so dass das erfindungsgemäße Verfahren mit deutlich weniger Energiekosten, weniger Personal und einem reduziertem maschinellen Aufwand auskommt. Das erfindungsgemäße Verfahren zeichnet sich durch die hohe Ausstoßleistung, konstant validierbare Parameter sowie eine variable Rohstoffauswahl aus. Die mit dem erfindungsgemäßen Verfahren hergestellte Masse ist dabei nahezu stippenfrei und es wird eine absolut vollständige und homogene Aufnahme des Weichmachers erreicht.

Insbesondere ist gegenüber dem batchweisen Herstellungsverfahren, für das 3-oder sogar 4-stöckige Aufbauten benötigt werden, in denen die Inhaltsstoffe zunächst batchweise in zwei oberen Stockwerken gemischt und anschließend die so entstandene Trockenmischen erst in einem in einem unteren Stockwerk des Aufbaus installierten Extruder extrudiert werden, mit dem erfindungsgemäßen Verfahren ermöglicht, die anorganische oder organische pastöse schmelzeförmige Masse in einem Aufbau mit maximal zwei Stockwerken herzustellen, was zusätzlich auch die Kosten des Gebäudes, in dem das Produkt mit dem erfindungsgemäßen Verfahren hergestellt werden soll, deutlich reduziert.

Vorteilhafte Weiterbildungen dieser erfindungsgemäßen Verfahren sind in den Unteransprüchen angegeben.

Bei dem erfindungsgemäßen Verfahren hat sich überraschenderweise gezeigt, dass die Energieaufnahme des in einer bevorzugten Ausführungsvariante der

Erfindung eingesetzten Doppelschneckenextruders bei der Zugabe von konventionell hergestellten Dry Blend gleich hoch ist wie die Energieaufnahme in der Direktextrusion. Wäre der Weichmacher im hier beschriebenen Verfahren während der Verfahrensschritte b) und c) noch nicht vollständig von der Ausgangsmasse absorbiert, so wäre die Energieaufnahme auf Grund des zähen und energieraubenden Aufschmelzvorgangs deutlich erhöht.

Auch die gemäß einer weiteren Ausführungsvariante zumindest einmal während des Mischens und Fördern der Ausgangsmasse und der Zuschlagstoffe erfolgende Rückförderung der Ausgangsmasse und der Zuschlagstoffe entgegen der Förderrichtung wirkt sich vorteilhaft auf die Durchmischung und das Eindiffundieren der Zuschlagstoffe in die Ausgangsmasse aus.

Gemäß einer bevorzugten Ausführungsvariante werden die Weichmacher und gemäß einer weiteren Ausführungsvariante sämtliche Zuschlagsstoffe vollständig im Verfahrensschritt a) zugeführt. Dadurch ist eine Temperierung der Weichmacher bzw. der weiteren flüssigen Zuschlagstoffe auf höhere Temperaturen oberhalb von 100°C, wie sie bei Zugabe in einem späteren Zeitpunkt erfolgen müsste, nicht notwendig.

Gemäß einer weiteren vorteilhaften Ausführungsvariante beträgt die Verweilzeit der Masse und der Zuschlagsstoffe im Mehrwellenextruder zwischen 3 Sekunden und 110 Sekunden, besonders bevorzugt zwischen 5 und 60 Sekunden, was gegenüber der vorbekannten Verfahren eine deutlich größeren Durchsatz an Masse ermöglicht.

Nachfolgend wird eine bevorzugte Ausführungsvariante des erfindungsgemäßen Verfahrens beschrieben.

Die Herstellung einer anorganischen oder organischen pastösen schmelzeförmigen Masse erfolgt vollständig in einem Extruder. Als Extruder wird hier sowohl ein Einwellenextruder oder Mehrwellenextruder mit gleich- oder gegenläufigen Extruderwellen oder auch ein mit einer sich in Richtung einer Längsachse einer Extruderwelle oszillierend bewegenden Extruderwelle versehener Extruder, auch als Kneter bezeichnet, verstanden.

In einer bevorzugten Ausführungsvariante des erfindungsgemäßen Verfahrens erfolgt die Herstellung der anorganischen oder organischen pastösen schmelzeförmigen Masse in einem co-rotierenden Doppelschneckenextruder in einem kontinuierlichen Prozess.

Der Doppelschneckenextruder weist dabei im Wesentlichen ein Gehäuse mit einer darin angeordneten gleichläufigen Doppelschnecke auf, die von einem Antrieb, bestehend aus Motor, Getriebe und Kupplungseinheit, angetrieben wird. Der Doppelschneckenextruder entspricht dabei im Wesentlichen dem in der DE 10 2006 010 458 A1 beschriebenen Doppelschneckenextruder.

In dem Gehäuse sind des Weiteren mindestens einer, vorzugsweise mehrere Materialeinlässe vorgesehen. Ein Materialeinlass oder einer der Materialeinlässe ist dabei in Förderrichtung der gleichläufigen Doppelschnecke am Anfang der Doppelschnecke vorgesehen, über den die Ausgangsmasse, beispielsweise ein thermoplastischer Kunststoff, insbesondere PVC, dem Doppelschneckenextruder zugeführt wird.

Durch diesen auch als Haupteinzug bezeichneten Materialeingang werden außerdem vorbestimmte Zuschlagsstoffe, welche insbesondere Weichmacher enthalten, dem als Doppelschneckenextruder ausgebildeten Mehrwellenextruder zugeführt.

Die Mengenbestimmung bei der Zuführung der Ausgangsmasse und der Weichmacher enthalten Zuschlagsstoffe erfolgt dabei vorzugsweise mittels gravimetrischer Dosierung.

In einer bevorzugten Ausführungsvariante werden die Zuschlagstoffe vor der Zugabe in den Extruder auf eine Temperatur von 60 bis 120°C vorgeheizt.

Die zugeführte Ausgangsmasse sowie die Weichmacher enthaltenen Zuschlagsstoffe werden anschließend entlang der nebeneinander angeordneten Extruderwellen in einer Förderrichtung gemischt und gefördert. Unmittelbar hinter dem Haupteinzug ist eine erste Temperiereinheit zur Aufheizung der zugeführten Ausgangsmasse und der Zuschlagsstoffe vorgesehen, mit der die Ausgangsmasse sowie die Zuschlagsstoffe auf eine Temperatur unterhalb der Aufschmelztemperatur der Ausgangsmasse temperiert werden.

In einer bevorzugten Ausführungsvariante wird zusätzlich ein Weichmacher der Ausgangsmasse in einem Bereich eines Zwickels des mehrwelligen Extruders zugeführt.

Nachdem die Zuschlagsstoffe in die Ausgangsmasse vollständig eindiffundiert sind, erfolgt eine weitere Temperierung der Ausgangsmasse sowie der Zuschlagsstoffe in als Doppelschneckenextruder ausgebildeten mehrwertigen Extruder auf eine Temperatur oberhalb der Aufschmelztemperatur der Ausgangsmasse. Im Anschluss daran wird die so erzeugte Masse aus dem mehrwelligen Extruder ausgetragen.

Die mittlere Verweilzeit der Ausgangsmasse und der Zuschlagsstoffe in dem mehrwelligen Extruder liegt dabei vorzugsweise zwischen 3 und 110 Sekunden, insbesondere zwischen 5 und 60 Sekunden.

Die hier eingesetzten Schnecken des Doppelschneckenextruders zeichnen sich dabei durch Schneckenlängen von 34 bis 60 Durchmessern der Schnecken des Doppelschneckenextruders aus, insbesondere werden Schneckenlängen von 38 bis 56 Durchmessern der Schnecken und besonders bevorzugt von 40 bis 52 Durchmessern der Schnecken eingesetzt.

Die Temperatur während Verfahrensschnitt d) des Verfahrens unterhalb der Aufschmelztemperatur der Ausgangsmasse liegt dabei bevorzugt bei etwa 130°C, während die Temperatur in Verfahrensschritt e) oberhalb der Aufschmelztemperatur der Ausgangsmasse, insbesondere im Falle von PVC als Ausgangsmasse bei etwa 150°C.

In Tabelle 1 sind beispielhafte Ansätze zur Herstellung anorganischer oder organischer pastöser schmelzeförmiger Massen mit dem erfindungsgemäßen Verfahren angegeben. In dieser Tabelle sind beispielhaft auch eingesetzte Zuschlagstoffe angegeben. So werden neben dem Weichmacher auch Stabilisatoren, Gleitmittel, Füllstoffe, Pigmente oder auch Sojaöl eingesetzt.

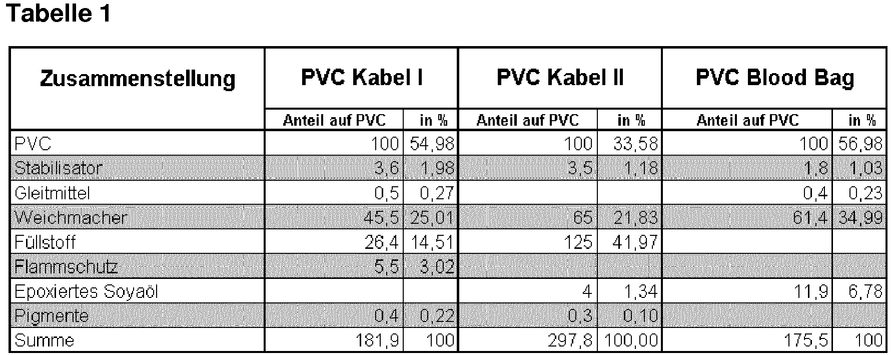

Wichtig ist, dass sowohl die Ausgangsmasse als auch die Weichmacher enthaltenen Zusatzstoffe bei relativ niedrigen Temperaturen, sprich zwischen 20 und 80°C in den Haupteinzug aufgegeben werden können und das die Verweilzeit von der Einspeisung der Ausgangsmasse und der Zusatzstoffe in den Haupteinzug mit vollständiger Absorption der Weichmacher inklusive auf Schmelzvorgang weniger als 30 Sekunden beträgt, so dass eine hohe Durchsatzleistung bei gleichzeitig hoher Produktqualität erreicht wird.

So wurde beispielhaft auf einer Testmaschine mit einem Schneckendurchmesser von 55 mm im realen Produktionsmaßstab mit einer Rezeptur für eine Leitungsisolation (PVC Kabel II gemäß Tabelle 1) eine Durchsatzleistung von 1300 kg/h ermittelt.

## Patentansprüche

1. Verfahren zur Herstellung einer anorganischen oder organischen pastösen schmelzeförmigen Masse, aufweisend die Verfahrensschritte:
a) Zuführen einer Ausgangsmasse in einen Haupteinzug eines Extruders mit einer Extruderwelle oder mehreren in einer Förderrichtung nebeneinander angeordneten Extruderwellen,
b) Zuführen von Weichmachern enthaltenden Zuschlagstoffen,
c) Mischen und Fördern der Ausgangsmasse und der Zuschlagstoffe entlang der Extruderwelle(n) in Förderrichtung,
d) Temperieren der Ausgangsmasse und der Zuschlagstoffe im Extruder auf eine Temperatur unterhalb der Aufschmelztemperatur der Ausgangsmasse,
e) Temperieren der Ausgangsmasse und der Zuschlagstoffe im Extruder auf eine Temperatur oberhalb der Aufschmelztemperatur der Masse nach erfolgten Eindiffundieren der Zuschlagstoffe in die Ausgangsmasse,
f) Austragen der Masse aus dem Extruder,
wobei die Verfahrensschritte a), b), c), d) und e) in dem Extruder während der Förderung entlang der einen Extruderwelle oder der in Förderrichtung betrachtet nebeneinander angeordneten Extruderwellen des Extruders erfolgen.

2. Verfahren nach Anspruch 1, **dadurch gekennzeichnet, dass** zumindest einmal während des Mischens und Fördern der Ausgangsmasse und der Zuschlagstoffe eine Rückförderung der Ausgangsmasse und der Zuschlagstoffe entgegen der Förderrichtung erfolgt.

3. Verfahren nach Anspruch 1 oder 2, **dadurch gekennzeichnet, dass** die Weichmacher vollständig in Verfahrensschritt a) zugeführt werden.

4. Verfahren nach Anspruch 1 oder 2, **dadurch gekennzeichnet, dass** sämtliche Zuschlagstoffe vollständig in Verfahrensschritt a) zugeführt werden.

5. Verfahren nach einem der vorstehenden Ansprüche, **dadurch gekennzeichnet, dass** die Verweilzeit der Masse und der Zuschlagstoffe im Extruder zwischen 3 Sekunden und 110 Sekunden beträgt.

6. Verfahren nach Anspruch 5, **dadurch gekennzeichnet, dass** die mittlere Verweilzeit der Masse und der Zuschlagstoffe im Extruder zwischen 5 Sekunden und 60 Sekunden beträgt.

7. Verfahren nach einem der vorstehenden Ansprüche, **dadurch gekennzeichnet, dass** der Weichmacher zentral in einem Bereich eines Zwickels des Extruders geführt wird.

8. Verfahren nach einem der vorstehenden Ansprüche, **dadurch gekennzeichnet, dass** der Weichmacher vor der Eingabe in den Haupteinzug des Extruders auf eine Temperatur von 40°C bis 120°C vorgeheizt wird.

9. Verfahren nach einem der vorstehenden Ansprüche, **dadurch gekennzeichnet, dass** die Ausgangsmasse ein thermoplastischer Kunststoff, insbesondere Polyvinylchlorid, ist.

10. Verfahren nach einem der vorstehenden Ansprüche, **dadurch gekennzeichnet, dass** die Drehrichtung der nebeneinander angeordneten Extruderwellen (2) des Mehrwellenextruders zumindest während der Verfahrensschritte a) bis d) gleich ist.

11. Verfahren nach einem der vorstehenden Ansprüche, **dadurch gekennzeichnet, dass** die Zuschlagstoffe bei der Zugabe in den Extruder gravimetrisch zudosiert werden.
